# EUROPEAN PATENT SPECIFICATION

(11) **EP 4 587 508 B1**
(45) Date of publication and mention of the grant of the patent: **25.11.2026**
(21) Application number: 23768556.5
(22) Date of filing: 11.09.2023
(51) Int. Cl.: C08J 11/14, C08J 11/26

(54) **METHOD FOR RECYCLING A POLYAMIDE WITH A MOLECULAR WEIGHT REDUCTION PRETREATMENT**
VERFAHREN ZUR WIEDERVERWERTUNG EINES POLYAMIDS MIT EINER MOLEKULARGEWICHTSREDUKTIONSVORBEHANDLUNG
PROCÉDÉ DE RECYCLAGE D'UN POLYAMIDE AVEC PRÉTRAITEMENT DE RÉDUCTION DE POIDS MOLÉCULAIRE

(30) Priority: 12.09.2022 US 202263405641 P; 03.10.2022 EP 22199325
(43) Date of publication of application: 23.07.2025
(73) Proprietor: Syensqo Specialty Polymers USA, LLC, Alpharetta, GA 30005-3914 (US)
(72) Inventor: TOURAUD, Franck, 69190 Saint-Fons (FR); JEOL, Stéphane, 69190 Saint-Fons (FR); BRANHAM, Kelly D., Alpharetta, Georgia 30005-3914 (US); SERVEL, Clement, 69190 Saint-Fons (FR)
(74) Representative: Senninger, Thierry
(86) International application number: PCT/EP2023/074858
(87) International publication number: WO 2024/056584

(56) References cited:
- CN-A- 87 101 541
- US-A- 4 620 032

## Description

The present disclosure relates to a method for recycling a polyamide that comprises a molecular weight reduction pretreatment and involves depolymerizing the polyamide into its constitutive monomers.

### [Context of the invention]

Plastics are inexpensive and durable materials, which can be used to manufacture a variety of products that find use in a wide range of applications, so that the production of plastics has increased dramatically over the years since their discovery. It is estimated that about 40% of these plastics are used for single-use disposable applications, such as packaging, agricultural films, disposable consumer items or for short-lived products that are discarded within a year of manufacture. Because of the durability of the polymers involved, substantial quantities of plastics are piling up in landfill sites and in natural habitats worldwide, generating increasing environmental problems. Even degradable and biodegradable plastics may persist for decades depending on local environmental factors, like levels of ultraviolet light exposure, temperature, presence of suitable microorganisms, etc.

One solution to reduce environmental and economic impacts correlated to the accumulation of plastic is closed-loop recycling wherein plastic material is mechanically reprocessed to manufacture new products. For example, one of the most common closed-loop recycling is the polyethylene terephthalate (PET) recycling. PET wastes are subjected to successive treatments leading to a food-contact-approved recycled PET, which is collected, sorted, pressed into bales, crushed, washed, chopped into flakes, melted and extruded in pellets and offered for sale. Then, these recycled PET may be used to create fabrics for the clothing industry or new packaging such as bottles or blister packs, etc.

However, plastic wastes are generally collected all together, so that plastic bales contain a mixture of different plastics, the composition of which may vary from source to source, and the proportions of which may vary from bale to bale. Consequently, recycling processes require preliminary selection to sort out the plastic products according to their composition, size, resin type, colour, functional additives used, etc.

Another potential process for recycling plastics consists of chemical recycling allowing recovering the monomers of the polymer. The resulting monomers may then be used to re-manufacture plastic materials (the same or other plastic materials) or to make other synthetic chemicals. While this chemical and enzymatic depolymerization process has been well optimized over the years for PET with very high yield of recycled ethylene glycol and recycled terephthalic acid, there is still need to develop similarly an efficient and optimized process for polyamides.

### [Background art]

WO 2022/058291 discloses an improved process for the acid hydrolysis of polylaurolactam with sulfuric acid at a temperature between 125 and 190°C, preferably at a temperature higher than 160°C. The weight ratio of H₂SO₄ / polyamide used is preferably 1:0.1 to 1:1.

US 5,668,277 discloses the depolymerization of nylon 6 or a mixture of nylons through the reaction with a nitrogen-containing compound such as ammonia or an amine. The reaction can be performed in the molten form. The method disclosed is different from the method of claim 1.

US 4,620,032 discloses a process for the depolymerization of a condensation polymer such as a polyester or a polyamide comprising the following steps: (a) intimately admixing molten condensation polymer selected from the group consisting of polyamides and polyesters with a depolymerization agent selected from the group consisting of (i) a product resulting from the complete hydrolytic depolymerization of said condensation polymer in liquid form, and (ii) water (b) admixing said molten condensation polymer and said depolymerization agent for a time sufficient that the molecular weight of said condensation polymer is reduced by at least 50%; and (c) subjecting said treated condensation polymer to neutral hydrolysis with a substantial excess of water based on the weight of the condensation polymer, to thereby effect substantially complete hydrolytic depolymerization of said condensation polymer.

CN 114163622 relates to the technical field of semi-aromatic polyamide waste recycling and discloses a process of depolymerization of a semi-aromatic polyamide by an alcoholysis reaction with 1,4-butanediol and a catalyzer. The method disclosed is different from the method of claim 1.

CN 87101541 (D1) does not disclose a compound (A*) selected in the group of C₂-C₁₈ carboxylic acids brought into contact with a polyamide.

US 4,605,762 (application number 563,812) discloses the continuous hydrolytic depolymerization of condensation polymers comprising subjecting a waste material selected from the group consisting of polyester polymer, polyamide polymer and polycarbonate polymer to aqueous hydrolysis in a hydrolysis zone at a temperature of between 200°C and 300°C and superatmospheric pressure of at least 1519875 Pa (15 atm).

US 4,620,032 (D2) discloses a process for the depolymerization of a condensation polymer comprising the steps in combination: (a) intimately admixing molten condensation polymer selected from the group consisting of polyamides and polyesters with a depolymerization agent selected from the group consisting of (i) a product resulting from the complete hydrolytic depolymerization of said condensation polymer in liquid form, and (ii) water, said depolymerization agent being present in said admixture in an amount by weight of less than the weight of said condensation polymer, (b) admixing said molten condensation polymer and said depolymerization agent for a time sufficient that the molecular weight of said condensation polymer is reduced by at least 50%; and (c) subjecting said treated condensation polymer to neutral hydrolysis with a substantial excess of water based on the weight of the condensation polymer, to thereby effect substantially complete hydrolytic depolymerization of said condensation polymer. D2 discloses the transesterification of PA66 with hexamethylenediamine and subsequent neutral hydrolysis with water. D2 does not disclose the hydrolysis step of claim 1 which is performed in acidic or basic conditions (therefore, not neutral) or with the help of an enzyme. Moreover, the sole example of depolymerization of a polyamide is example 4 wherein the compound added in hexamethylene diamine and not a C₂-C₁₈ carboxylic acid.

### [Technical problem to be solved]

The depolymerization of polyamides of the AABB type is well documented and may be performed under different conditions. A polyamide of the AABB type results from the polycondensation of at least one diamine and at least one diacid.

There is a need for an efficient and easy to implement method of recovery of the monomers from a product based on a polyamide of the AABB type, notably from a product further comprising fillers. In order to address the scarcity of water, the method should also be environmentally-friendly with the use of a limited amount of water.

The method of the invention aims at solving this technical problem.

### [Brief disclosure of the invention]

The method of the invention is disclosed in the appended claims, notably in one of claims 1-16.

More precisions and details about the method are now provided below.

### [General definitions]

wt.% is a percentage by weight. Mol.% is a percentage by mole.

The proportions of recurring units in a polymer are expressed in mol% and given relative to the total amount of recurring units in said polymer.

When numerical ranges are indicated, range ends are included.

In the present application, unless otherwise indicated, any specific embodiment or technical feature relating to the method of the invention is applicable to and interchangeable with another embodiment or technical feature also relating to the method of the invention and disclosed elsewhere in the application.

A polyphthalamide is a polyamide comprising more than 50.0 mol% of recurring units (R_{PPA}) formed from the polycondensation of (i) a phthalic acid selected in the group consisting of isophthalic acid, terephthalic acid and combination of isophthalic acid and terephthalic acid and (i) at least one diamine, the proportion in mol% being based on the total amount of recurring units of the polyamide.

### Disclosure of the invention

The invention relates to a method of recovery of the monomers from a polyamide (PA), notably of the AABB type, and is defined in claim 1.

### Product (P)

The product (P) comprises a polymer component which comprises at least one polyamide (PA).

Product (P) may comprise one or more than one polyamide (PA). All the details provided herein for polyamide (PA) apply to a product (P) comprising more than one polyamide (PA).

The recurring units of polyamide (PA) consist of recurring units (R_{PA}) formed from the condensation of at least one diacid (A) and at least one diamine (B), notably as disclosed below. The recurring units (R_{PA}) are typically according to formula (F) below:

-NH-Rₐ-NH-C(O)-R_{b}-C(O)- (F)

wherein Rₐ and R_{b}, equal to or different from each other, are divalent hydrocarbon groups selected in the group of aliphatic, alicyclic, cycloaliphatic and aromatic groups.

The polyamide (PA) is typically prepared by polycondensation of:
- at least one diacid (A) selected in the group of C₂-C₁₈ aliphatic diacids; diacids of formula HOOC-Cy-COOH where Cy is a C₃-C₆ non-aromatic cycle optionally substituted by C₁-C₁₀ alkyl groups; isophthalic acid and terephthalic acid; and
- at least one diamine (B) selected in the group consisting of C₂-C₁₈ aliphatic diamines, C₄-C₁₈ cycloaliphatic diamines and C₈-C₁₈ arylaliphatic diamines.

The polyamide (PA) may notably be prepared by polycondensation of:
- at least one diacid (A) selected in the group of C₂-C₁₈ aliphatic diacids, isophthalic acid and terephthalic acid; and
- at least one diamine (B) selected in the group consisting of C₂-C₁₈ aliphatic diamines, C₄-C₁₈ cycloaliphatic diamines and C₈-C₁₈ arylaliphatic diamines.

The diacid (A) may be an aliphatic diacid represented by general formula (I) HOOC-Alk-COOH, wherein Alk is a C₁-C₁₆ linear or branched alkylene group. Alk is generally a C₁-C₁₆ linear alkylene group. For instance, the aliphatic diacid (A) may be adipic acid, azelaic acid or sebacic acid.

The diacid (A) may be a diacid of formula HOOC-Cy-COOH where Cy is a C₃-C₆ non-aromatic cycle optionally substituted by C₁-C₁₀ alkyl groups. For instance, the diacid may be 1,4-cyclohexane dicarboxylic acid or 1,3-cyclohexane dicarboxylic acid.

The diamine (B) may be an aliphatic diamine represented by the general formula (II) H₂N-Alk-NH₂, wherein Alk is a C₂-C₁₈ linear or branched alkylene group. For instance, the aliphatic diamine may be hexamethylene diamine, 2,2,4-trimethyl-1,6-hexanediamine, 2,4,4-trimethyl-1,6-hexanediamine, 2-methyl-1,5-diaminopentane, 1,5-diaminopentane or 1,9-diamino-nonane.

The diamine (B) may also be a cycloaliphatic diamine. A cycloaliphatic diamine is a diamine comprising at least one cycloaliphatic group between the two NH₂. The cycloaliphatic diamine may more particularly be selected in group consisting of isophorone diamine, norbornane diamine, 1,3-bis(aminomethyl)cyclohexane (1,3-BAC), 1,4-bis(aminomethyl)cyclohexane (1,4-BAC) and the diamines of formula (III): 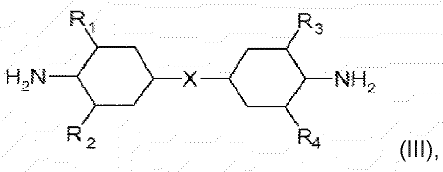 wherein R₁, R₂, R₃ and R₄ are independently selected in the group of H and C₁-C₆ alkyl groups and X is a C₁-C₁₀ alkylene groups. In formula (III), X is more particularly a methylene group. In formula (III), R₁, R₂, R₃ and R₄ are more particularly independently selected in the group consisting of H and CH₃.

The cycloaliphatic diamine may more particularly be selected in the group consisting of isophorone diamine, norbornane diamine, 1,3-BAC, 1,4-BAC, parabis(aminocyclohexyl)-methane (PACM) and bis-(3-methyl-4-aminocyclohexyl)-methane (MACM).

The diamine (B) may be a diamine of formula (IV): 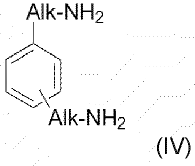 wherein Alk is a C₁-C₆ linear or branched alkylene group. The diamine of formula (IV) may be for instance m-xylylene diamine (MXDA) or p-xylylene diamine (PXDA).

Polyamide (PA) may be an amorphous or semi-crystalline polyamide.

Polyamide (PA) may be a polyphthalamide.

The polyamide (PA) may more particularly be selected in the group consisting of polyamide 6.6, polyamide 6.9, polyamide 6.10, polyamide 6.12, polyamide 10.10, polyamide 5.10, polyamides 5.6, polyamide 5.9, polyamide 4.6, polyamide 4.9, polyamide 4.10, polyamide 12.12, polyamide 10.12, polyamide XT where X is a C4-C12-diamine; polyamide MXD6, polyamide MXD6/PXD6, polyamide MXD6/MXDI, polyamide 6T/66, polyamide 6T/6I/66, polyamide 6T/6I and mixtures thereof *(note: MXD designates a structural unit with MXDA (m-xylylenediamine) as the diamine; PXD designates a structural unit with PXDA (p-xylylenediamine) as the diamine; I designates designates a structural unit with isophthalic acid* as *the diacid; T designates designates a structural unit with terephtahalic acid as the diacid).*

The polyamide (PA) may more particularly be a polyamide 6.6, a polyamide 6.10 or MXD6.

According to an embodiment, polyamide (PA) is not PA 6 or PA66.

According to another embodiment, product (P) does not comprise PA 6 or PA66.

The polymer component may also comprise another polymer (p) that is not a polyamide (PA) as defined above. Polymer (p) may be either blended with the polyamide (PA) and/or physically present with polyamide (PA) in product (P) but not blended. Preferably, the other polymer (p) is not a polyamide. For instance, the other polymer (p) can be a polyester such as polyethylene terephthalate, polytrimethylene terephthalate, polybutylene terephthalate, polycyclohexylenedimethylene terephthalate; a polyolefin such as polyethylene or polypropylene; a polyphenylenether.

Product (P) usually also comprises at least one polymer additive (Add). The polymer additive (Add) may be selected in the group consisting of fillers, colorants, dyes, pigments, lubricants, plasticizers, flame retardants, nucleating agents, heat stabilizers, UV stabilizers, elastomers, core-shell particles, adhesives, antioxidants and processing aids. The polymer additive (Add) may more particularly be selected in the group consisting of fillers, colorants, dyes, pigments, lubricants, elastomers and heat stabilizers.

Product (P) to be treated may be in various forms. Indeed, product (P) may for instance be in the form of pellets, powders, films, flakes, molded or extruded or 3D printed parts, tubes, filaments, yarns, textiles, fabrics or under any type of geometry. More particularly, product (P) may be in the form of a film comprising at least one layer comprising or made of the polyamide (PA). Product (P) may more particularly be in the form of a multilayer film comprising at least one layer comprising or made of the polyamide (PA). For example, product (P) may be in the form of a multilayer film comprising a layer comprising or made of the polyamide (PA), notably MXD6, in between two layers comprising polyethylene terephthalate (PET).

Product (P) is conveniently in the form of particles with a size lower than 10.0 mm, preferably lower than 5.0 mm, even preferably lower than 3.0 mm.

The proportion of polyamide (PA) in product (P) is generally at least 30.0 wt.%, more particularly at least 40.0 wt.%. This proportion may be at least 50.0 wt.% or even at least 60.0 wt.%. This proportion may be 100 wt.% if product (P) consists of polyamide (PA). Yet, this situation is rare as the method of the invention is meant to apply to products of our day-to-day life for which polymer additives are usually present in combination with the polyamide (PA). The proportion of polyamide (PA) in product (P) is generally less than 99.9 wt.%, more particularly less than 99.5 wt.%.

The number average molecular weight Mn of the polyamide (PA) is generally between 500 and 50,000 g/mol, preferably between 7,000 and 35,000 g/mol, even more preferably between 10,000 g/mol and 20,000 g/mol. Mn is determined by the equation Mn=2,000,000/[EG], with [EG] being the concentration in meq/kg of the end-groups of the polyamide (PA). The usual end-groups in polyamides are -NH₂ and -COOH. Yet, those end-groups may in some processes be converted, partly or totally, into other end-groups by reaction with an end-capping agent. Examples of end-capping agent are monofunctional molecules containing an amine or a carboxylic acid such as acetic acid, benzoic acid, propionic acid.

In the experimental section, Mn was followed by Size Exclusion Chromatography (SEC).

### Optional pretreatment of product (P)

Product (P) may be pretreated prior to step a). The pretreatment step may include a mechanical or physical modification of product, such as cutting, crushing, grinding or fractionation.

### Step a)

In step a), product (P) is put into contact with a compound (A*) in order to reduce the molecular weight of the polyamide (PA).

Step a) is performed in the molten form. The polymer component comprising the polyamide(s) (PA) is in the molten form. The temperature T of said polymer component is typically greater than the melting point of semi-crystalline polyamide (PA) or than the glass transition temperature of amorphous polyamide (PA). If product (P) comprises more than one polyamide (PA) and/or any polymer (p), one needs to take into account the respective melting point or glass transition temperature of the all the polymers of product P. Temperature T is typically at least 200°C or even at least 250°C.

Step a) may be performed in any melt-mixing apparatus designed to mix polymers in the molten form. The mixing of step a) ensures that compound (A*) is well dispersed.

Step a) may be performed in a kneader such as a Banbury mixer, in a static mixer such as the SMX static mixer commercialized by Sulzer or in an extruder.

The static mixer needs to be adapted to fluids of a high viscosity such as molten polymers. The skilled person knows that there exist several types of static mixers adapted to fluids of a high viscosity, notably those disclosed in Progress in Polymer Science, 37(10), 1333-1349.

Step a) is preferably performed in an extruder, notably a single-screw extruder or a twin-screw extruder.

The compound (A*) is selected in the group of C₂-C₁₈ carboxylic acids.

Compound (A*) may more particularly be selected in the group consisting of the C₂-C₁₈ monocarboxylic acids, C₂-C₁₈ dicarboxylic acids and the combination of two or more of said acids.

Compound (A*) may more particularly be selected in the group consisting of linear or branched C₂-C₁₈ monocarboxylic acids, linear or branched C₂-C₅ dicarboxylic acids, linear or branched C₇-C₁₈ dicarboxylic acids and the combination of two or more of said acids.

Compound (A*) may more particularly be selected in the group consisting of carboxylic acids of formula CH₃-(CH₂)ₙ-COOH (V), n being an integer between 0 and 16, carboxylic acids of formula HOOC-(CH₂)ₘ-COOH (VI), m being an integer between 0 and 16, isophthalic acid, terephthalic acid and the combination of two or more of said acids. m may more particularly be an integer between 1 and 16. m may more particularly be an integer between 1 and 16 with the proviso that m is not 2.

Compound (A*) may more particularly be adipic acid, sebacic acid, azelaic acid, terephthalic or isophthalic acid.

According to an embodiment, compound (A*) is advantageously the same as the diacid (A) or one of the diacids (A) of polyamide (PA), notably of polyamide AABB. This embodiment makes it possible to avoid introducing an acid different from the diacid (A) in the stream (S) to be further processed, which makes the step d) of separation and recovery easier to implement.

According to an embodiment, compound (A*) is not adipic acid.

According to a specific embodiment (E), the polyamide is a polyphthalamide and compound (A*) is terephthalic and/or isophthalic acid.

One or more than one compound (A*) may be used in the method of the invention. Yet, to avoid having too many components in the stream (S) to be further processed in step d), it is preferably to use only one compound (A*).

In step a), the proportion of compound (A*) is usually less than 50.0 wt%, preferably less than 40.0 wt%, this proportion in wt% being expressed as the weight of compound (A*) relative to the total weight of [polyamide (PA)+compound (A*)]. This proportion is typically at least 5.0 wt%, preferably at least 10.0 wt%. For the sake of clarity, if product (P) comprises more than one polyamide (PA), this proportion is relative to the total weight of [polyamides (PA)+compound (A*)].

In step a), the number average molecular weight (Mn) of the polyamide (PA) is preferably reduced by a ratio r of at least 20.0%, preferably of at least 40.0%, more preferably at least 60.0%, more preferably at least 75.0%. r is defined as: r = (Mn of polyamide (PA) - Mn at the end of step a))/Mn of polyamide (PA) x 100. Mn can advantageously be determined by size exclusion chromatography (SEC).

Ratio r may be between 20.0% and 100.0%, more particularly between 20.0% and 98.0%, even more particularly between 40.0% and 95% or between 75.0 and 90.0%.

### Step b)

In step b), the mixture obtained at the end of step a) is optionally treated so as to remove from the molten mixture at least one solid material. Step a) makes it possible to reduce the viscosity of the molten mixture which helps manipulate and treat the molten mixture. See the experimental section.

The solid material that can be removed may be one of the polymer additive(s) (Add). For instance, the solid material that can be removed in step b) can be the filler(s), the elastomer(s) or products of degradation of product (P).

The solid material that can be removed may also be a product of degradation of the polymer(s) or of the polymer additive(s) which was generated in step a).

### Step c)

In step c), the hydrolysis of the molecules of polyamide(s) present in the mixture obtained at the end of step a) or optional step b), is performed. The molecules of polyamide(s) that are hydrolyzed are notably the molecules of the polyamide(s) initially present in product (P) and the molecules of polyamide(s) resulting from the reaction with compound (A*).

The hydrolysis of the polyamide is dependent on many parameters and is performed in an aqueous medium. Step a) makes it possible to improve the dispersibility of the polyamide(s) in the aqueous medium which helps decrease the time of hydrolysis.

Step c) may be performed in a continuous mode or preferably in batch. The skilled person can refer to Dictionary of Chemical Engineering of Professor Carl Schaschke, ISBN 978-0-19-965145-0 for an illustration of these terms.

Step c) is preferably performed in batch in a batch reactor in which product (P) is initially charged and no further product (P) is transferred during the hydrolysis.

Under option (i), the hydrolysis is an acidic or basic hydrolysis involving respectively at least one acid (Ac) or at least one base (Ba) and performed in an aqueous medium at a pH respectively lower than 6.0 or higher than 8.0. Further additional details relating to option (i) are provided below.

### Hydrolysis in acidic conditions

The acidic hydrolysis is performed at a pH lower than 6.0, preferably lower than 4.0. The acid (Ac) to be used for the acidic hydrolysis is preferably a strong acid with a pKa lower than 2.0. The acid (Ac) may be selected in the group consisting of HCl, H₂SO₄ or a combination of two or more of said acids. The acid (Ac) is preferably HCl.

The hydrolysis in acidic conditions of step c) is advantageously performed with the following initial proportions in the aqueous medium:
- proportion of polyamide (PA): at least 15.0 wt.%;
- proportion of water: between 20.0 and 70.0 wt.%;
- the remainder as acid (Ac) with the condition that the proportion of acid (Ac) is at least 2.0 wt.%, preferably at least 2.5 wt.%.

These proportions are expressed in wt.% and based on the total weight of polyamide (PA), water and acid (Ac) in the liquid medium. As mentioned above, if product (P) comprises more than one polyamide (PA), the proportions are based on the total weight of polyamides (PA), water and acid (Ac).

The initial proportion of polyamide (PA) in the aqueous medium is advantageously at least 15.0 wt.%. This proportion may be between 15.0 wt.% and 55.0 wt.%, preferably between 15.0 wt.% and 35.0 wt.%, preferably between 15.0 wt.% and 30.0 wt.%. This proportion is calculated by taking into account the proportion of the polyamide (PA) in product (P). The higher the proportion of polyamide (PA) in the liquid medium, the better the productivity. Yet, the proportion is limited to take into account the increase over time of the viscosity of the liquid medium and the need to keep a sufficient quantity of acid (Ac) to maintain a suitable kinetics of depolymerization.

The proportion of water in the aqueous medium is typically between 20.0 wt.% and 70.0 wt.%. This proportion may be between 30.0 wt.% and 70.0 wt.% or between 35.0 wt.% and 65.0 wt.%. For clarity's sake, it is noted that the proportion of water used in the context of the invention, unless otherwise expressed, takes into account the water added and the water that may stem from the solution of the acid (Ac).

The initial proportion of the acid (Ac) corresponds to the complement to 100 wt.%. In other words, proportion of acid (Ac) in wt.% = 100% - proportion of PA in wt.% - proportion of water in wt.%. The minimal proportion of the acid (Ac) in the liquid medium is preferably at least 2.0 wt.%, preferably at least 2.5 wt.%.

The initial proportion of the acid (Ac) is generally between 2.0 wt.% and 55.0 wt.%. This proportion may be between 5.0 wt.% and 55.0 wt.%.

For clarity's sake, it is noted that the proportion of the acid (Ac) in the liquid medium used in the context of the invention, unless otherwise expressed, is given as the proportion of the pure acid. For instance, a proportion of 20.0 wt.% refers to 20.0 wt.% of pure HCl irrespective of the strength of the solution (*e*.*g*. solution of HCl at 37 wt.%). For clarity's sake also, if the acid (Ac) corresponds to a combination of two or more of the acids as defined above, the proportions of acid (Ac) given herein correspond to the total proportions of the acids.

The initial molar ratio (H/N) representing the amount of H from the acid (Ac) over the amount of N from the amide bonds of the polyamide (PA) is preferably between 1.1 and 7.0. This ratio is preferably at least 2.0. This ratio may preferably be between 2.5 and 7.0.

Specific conditions of hydrolysis in acidic conditions that may be used are now provided below:

### Specific conditions (I)

- proportion of polyamide (PA): between 15.0 and 55.0 wt.%;
- proportion of water: between 20.0 and 70.0 wt.%;
- proportion of acid (Ac): between 10.0 and 55.0 wt.%;
- H/N between 2.0 and 7.0.

### Specific conditions (II)

- proportion of polyamide (PA): between 15.0 and 35.0 wt.%;
- proportion of water: between 20.0 and 55.0 wt.%;
- proportion of acid (Ac): between 12.0 and 50.0 wt.%;
- H/N between 2.5 and 3.5.

### Specific conditions (III)

- proportion of polyamide (PA): between 15.0 and 30.0 wt.%;
- proportion of water: between 30.0 and 45.0 wt.%;
- proportion of acid (Ac): between 12.0 and 50.0 wt.%;
- H/N between 2.5 and 3.5.

In addition to water, product (P) and acid (Ac), the aqueous medium may also comprise an organic component selected in the group of an alcohol, ketone and combination thereof. The organic component is typically liquid at ambiant temperature. The organic component preferably comprises less than 10 carbon atoms. The alcohol may more particularly be selected in the group consisting of methanol, ethanol, propanol, butanol and combination thereof. The ketone may more particularly be selected in the group consisting of acetone, propanone, butanone and combination thereof.

### Hydrolysis in basic conditions

The basic hydrolysis is performed at a pH higher than 8.0, preferably higher than 9.0. The base (Ba) to be used for the basic hydrolysis is preferably a strong base with a pKa higher than 8.0. The base (Ba) may be selected in the group consisting of NaOH, KOH or a combination of two or more of said bases. The base (Ba) is preferably NaOH.

Step c) under option i) may be performed at a temperature which is between 20°C and 190°C or between 20°C and 150°C. This temperature is preferably between 100°C and 150°C.

Under option (ii), the hydrolysis is an enzymatic hydrolysis. This type of hydrolysis is performed in the presence of at least one enzyme.

The enzyme is suitable to break the -NH-CO- bond of the polyamide(s). The enzyme may be an amidase, such as an aryl-acylamidase. The enzyme can for instance be one of the enzymes disclosed in US 6,214,592 of Rhone Poulenc Fibres et polymeres SA, notably with the sequence provided in said US patent.

Step c) under option ii) is preferably performed at a temperature which is not detrimental for the activity of the enzyme(s). This temperature is usually lower than 60°C.

For both options i) and ii), step c) is preferably performed at a pressure strictly less than 1519875.0 Pa (< 15.0 bar), preferably less than and equal to 1013250.0Pa (≤ 10.0 bar), preferably less than and equal to 506625.0 Pa (≤ 5.0 bar), preferably less than and equal to 303975 Pa (≤ 3.0 bar).

Step c) under option (i) is performed with a limited amount of water. Step c) under option (i) is performed with a weight ratio r_{water} lower than 5.0, r_{water} being defined as weight of water of the aqueous medium used in step c) / weight of product (P).

Step c) under option (ii) may advantagelously be performed with a limited amount of water. Step c) under option (ii) is advantageously performed with a weight ratio r_{water} lower than 5.0, r_{water} being defined as weight of water of the aqueous medium used in step c) / weight of product (P).

Degree of conversion R: the degree of conversion R achieved at the end of step c) is preferably at least 90.0 mol%, preferably at least 95.0 mol%. This ratio corresponds to the degree of conversion of the hydrolysis of the polyamide (PA). The degree of conversion is defined as the decrease in the quantity of a reactant divided by the initial quantity thereof (IUPAC definition).

R can be calculated easily by mass conversion by taking into account the weight of polyamide(s) (PA) initially present in product (P) and the amount of polyamide(s) (PA) left at the end of step c). If product (P) comprises more than one polyamide (PA), R is calculated by taking into account the total weight of the polyamide(s) (PA).

With the method of the present invention, it is possible to reach a R of at least 90.0 mol%, or even at least 95.0 mol%, for a duration of step c) of less than 9.0 hours, preferably less than 8.0 hours.

### Step d)

In step d), a stream (S) comprising the diacid (A), the diamine (B) and compound (A*), each of these three compounds being either in their free form or in the form of a salt, is recovered at the end of step c) and is further processed in order to separate and recover the diacid (A), the diamine (B) and compound (A*).

Depending on the conditions of the hydrolysis step c), the diacid (A) and compound (A*) on the one hand and the diamine (B) on the other hand may be in their free form (respectively acid form or base form) or in the form of a salt. Thus, if the hydrolysis is an acidic hydrolysis, stream (S) comprises the diacid (A), the diamine (B) in the form of a salt, notably in the form of a salt with the acid (Ac), and compound (A*). Likewise, if the hydrolysis is a basic hydrolysis, stream (S) comprises a salt of the diacid (A) with the base (Ba), the diamine (B) and a salt of compound (A*) with the base (Ba).

The monomers recovered can be further purified to the level of purity requested by the application.

Optionally, recovered compound (A*) may also be recycled to be used again in step a).

Step d) after hydrolysis in acidic conditions comprises:
(i) - at least one unit operation selected in the group consisting of liquid-solid separation (e.g. filtration), crystallization and distillation; and
(ii) - a step in which the salt of the diamine (B) reacts with a base in order to release the diamine (B). The base used in step (ii) is advantageously an inorganic base of formula XOH, X being Li, Na, K or a combination of two or more of these cations.

Different methods combining the crystallization and separation steps are available to further process stream (S). As an example, with an acidic hydrolysis, the diacid (A), the compound (A*) and the salt of the diamine (B) are separated. The salt of diamine (B) having been separated reacts with an inorganic base of formula XOH, X being Li, Na, K or a combination of two or more of these cations, to release the diamine (B). This reaction of neutralization is the following: salt of diamine (B) + XOH -> diamine (B). For instance, if HCl is used in the acidic hydrolysis of PA66, the salt of diamine (B) is NH₂-(CH₂)₆-NH₂, 2HCl and the reaction of neutralization is: NH₂-(CH₂)₆-NH₂, 2HCl + 2 XOH -> NH₂-(CH₂)₆-NH₂ + 2XCl + 2 H₂O. XOH is preferably NaOH.

The separation may conveniently be performed by crystallisation. Crystallisation is a separation technique that makes use of differences in solubility of the components that are present in the aqueous medium. For instance, in the case of PA 66, a substantial part of the diacid (A) (adipic acid) can crystallise at ambient temperature while the salt of the diamine (B) (hexamethylene diamine) can be left in the aqueous medium. If the aqueous medium is cooled below ambient temperature, more adipic acid crystallizes which helps increase the yield of recovery of the adipic acid. After reaction with the inorganic base XOH, the diamine (B) is released and can be recovered, for instance by distillation.

### [Experimental section]

### Example 1: polyamide 66 with A*= adipic acid

Step a) is performed with DSM microcompounder with the following conditions: 13.5g of a recycled virgin polyamide 66 are mixed with 1.5g of adipic acid (corresponding to approx. to a proportion of compound (A*) of 10.0 wt%) and the microcompounder is run at 285°C and at 100 rpm for 3 minutes. The mixture obtained at the end of step a) is characterized SEC and shows a reduction of the Mn.

Step a) is performed again with two other proportions of adipic acid: 20 and 30% wt.: see Table 1.

**Table I**

| **Ex.** | **proportion of (A*)** | **Mn by SEC (g/mol)** | **Ratio r** | **viscosity (Pa.s @ 50Hz)** |
|---|---|---|---|---|
| CE1-1 | 0 | 10,100 | / | 120 @ 275°C |
| Ex1-2 | 10.0% | 2,000 | 80% | 0.16 @ 275°C |
| Ex1-3 | 20.0% | 1,000 | 90% | 0.10 @ 250°C |
| Ex1-4 | 30.0% | 950 | 91% | 0.60 @ 215°C |

The melt viscosities of the polyamide PA66 and the products after step a) were measured using an ARES rheometer (for the starting PA66) or coquette module (for the products of Ex1-2, 1-3 and 1-4). As can be seen, the viscosities of the products of Ex1-2, 1-3 and 1-4 are well reduced. Such a low viscosity in the molten form helps in the subsequent steps of the method of the invention.

The three products of Ex1-2, 1-3 and 1-4 show an improved water dispersibility in ionized water in comparison to the polyamide PA66. The granules dislocate when in contact with water and the particles stay longer in suspension when the dispersion is shaken.

### Example 2: polyamide 66 with A*= terephtalic acid

Step a) is performed with DSM microcompounder with the following conditions: 9.1g of a polyamide 66 are mixed with 3.9g of terephthalic acid (proportion = 30 wt%) and the microcompounder is run at 280°C and at 100 rpm for 3 minutes.

A molecular weight reduction from Mn=10,100 g/mol to Mn= 1,090 g/mol is measured by SEC using a Light scattering detector (r=89% reduction).

### Example 3: polyamide 66 with A*= sebacid acid

Step a) is performed with the DSM microcompounder with the following conditions: 9.1g of a polyamide 66 are mixed with 3.9 g of sebacic acid (proportion 30 wt%) and the microcompounder is run at 280°C and at 100 rpm for 3 minutes.

A molecular weight reduction from Mn=10,100 g/mol to Mn= 2,870 g/mol is measured by SEC using a Light scattering detector (r=72% reduction).

### Example 4: acidic hydrolysis of the product of Ex 1-6 obtained at the end of step b)

A 300ml glass reactor equipped with a reflux condenser and a mechanical stirrer is loaded with 30g of the solid flakes recovered from Ex 1-4 (0.186 mol of amide bond) and hydrochloric acid 37% wt. solution. The reaction mixture is immersed in an oil bath at 120°C and kept at reflux for 24 hours.

The solid flakes are easily dispersed in the solution of hydrochloric acid.

### Example 5: polyamide 66 and polyamide 66/glass fibers with A*= adipic acid

Ex. 5-1: step a) was performed with DSM microcompounder with the following conditions: 13.5g of a PA66 (Radipol^{®} A45 from Radici Group with Mn=25,400 g/mol) are mixed with 1.0g of adipic acid and the microcompounder is run at 290°C and at 200 rpm for 3 minutes (Ex 5-1). The mixture obtained at the end of step a) was characterized by SEC and showed a reduction of the average Mn. See Table II.

Ex. 5-2: a compound made of PA66 (Radipol^{®} A45 from Radici Group with Mn=25,400 g/mol) and 56 wt% of chopped glass fiber was prepared by twin screw extrusion. Step a) was performed with the compound: 13.5 g of the compound was mixed with 0.4 g of adipic acid and the microcompounder was run at 290°C and at 200 rpm for 3 minutes. The mixture obtained at the end of step a) was characterized by SEC and shows similarly a reduction of the average Mn. See Table II.

**Table II**

| **Ex.** | **Proportion of (A*)** | **Mn (g/mol)** | **ratio r** |
|---|---|---|---|
| **Ex5-1** | 6.9% | 9,800 | 61% |
| **Ex5-2** | 6.3% | 8,400 | 67% |

## Claims

1. Method of recovery of the monomers from a polyamide (PA), notably of the AABB type, comprising the following steps:
- a) a product (P) comprising a polymer component comprising the polyamide (PA) is put into contact with a compound (A*) in order to reduce the molecular weight of the polyamide (PA), wherein the polymer component is in the molten form and the compound (A*) is selected in the group of C₂-C₁₈ carboxylic acids;
- b) the mixture obtained at the end of step a) is optionally treated so as to remove from the molten mixture at least one solid material;
- c) the hydrolysis of the molecules of polyamide(s) present in the mixture obtained at the end of step a) or optional step b), is performed in an aqueous medium either (i) by an acidic or basic hydrolysis involving an acid (Ac) (hydrolysis in acidic conditions) or a base (Ba) (hydrolysis in basic conditions) and performed at a pH respectively lower than 6.0 or higher than 8.0 or (ii) by an enzymatic hydrolysis;
- d) a stream (S) comprising the diacid (A), the diamine (B) and compound (A*), each of these three compounds being either in their free form or in the form of a salt, is recovered at the end of step c) and is further processed in order to separate and recover the diacid (A), the diamine (B) and compound (A*).

2. Method of claim 1, wherein the recurring units of polyamide (PA) of the AABB type consist of recurring units (R_{PA}) formed from the condensation of at least one diacid (A) and at least one diamine (B),
wherein recurring units (R_{PA}) are according to formula (F) below:
-NH-Rₐ-NH-C(O)-R_{b}-C(O)- (F)
wherein Rₐ and R_{b}, equal to or different from each other, are divalent hydrocarbon groups selected in the group of aliphatic, alicyclic, cycloaliphatic and aromatic groups.

3. Method according to any one of the preceding claims, wherein the polyamide (PA) is selected in the group consisting of polyamide 6.6, polyamide 6.9, polyamide 6.10, polyamide 6.12, polyamide 10.10, polyamide 5.10, polyamides 5.6, polyamide 5.9, polyamide 4.6, polyamide 4.9, polyamide 4.10, polyamide 12.12, polyamide 10.12, polyamide XT where X is a C4-C12-diamine; polyamide MXD6, polyamide MXD6/PXD6, polyamide MXD6/MXDI, polyamide 6T/66, polyamide 6T/6I/66, polyamide 6T/6I and mixtures thereof.

4. Method according to any one of the preceding claims, wherein the proportion of polyamide (PA) in product (P) is at least 30.0 wt.%, more particularly at least 40.0 wt.%.

5. Method according to any one of the preceding claims, wherein compound (A*) is selected:
- in the group consisting of the C₂-C₁₈ monocarboxylic acids, C₂-C₁₈ dicarboxylic acids and the combination of two or more of said acids; or
- in the group consisting of linear or branched C₂-C₁₈ monocarboxylic acids, linear or branched C₂-C₅ dicarboxylic acids, linear or branched C₇-C₁₈ dicarboxylic acids and the combination of two or more of said acids.

6. Method according to any one of the preceding claims, wherein compound (A*) is selected:
- in the group consisting of carboxylic acids of formula CH₃-(CH₂)ₙ-COOH (V), n being an integer between 0 and 16, carboxylic acids of formula HOOC-(CH₂)ₘ-COOH (VI), m being an integer between 0 and 16, isophthalic acid, terephthalic acid and the combination of two or more of said acids; or
- in the group consisting of carboxylic acids of formula CH₃-(CH₂)ₙ-COOH (V), n being an integer between 0 and 16, carboxylic acids of formula HOOC-(CH₂)ₘ-COOH (VI), m being an integer between 0 and 16 with the proviso that m is not 2, isophthalic acid, terephthalic acid and the combination of two or more of said acids

7. Method according to any one of the preceding claims, wherein compound (A*) is the same as the diacid (A) or one of the diacids (A) of polyamide (PA).

8. Method according to any one of the preceding claims, wherein the proportion of compound (A*) is less than 50.0 wt%, preferably less than 40.0 wt%, this proportion in wt% being expressed as the weight of compound (A*) relative to the total weight of [polyamide (PA)+compound (A*)]; and/or the proportion of compound (A*) is at least 5.0 wt%, preferably at least 10.0 wt%, this proportion in wt% being expressed as the weight of compound (A*) relative to the total weight of [polyamide (PA)+compound (A*)].

9. Method according to any one of the preceding claims, wherein the number average molecular weight (Mn) of the polyamide (PA) is preferably reduced by a ratio r of at least 20.0%, preferably of at least 40.0%, more preferably at least 60.0%, more preferably at least 75.0%, r being defined as: r = (Mn of polyamide (PA) - Mn at the end of step a))/Mn of polyamide (PA)) x 100.

10. Method according to any one of the preceding claims, wherein the degree of conversion R of polyamide (PA) achieved at the end of step c) is preferably at least 90.0 mol%, preferably at least 95.0 mol%.

11. Method according to any one of the preceding claims, wherein step c) is an acidic hydrolysis, preferably performed at a pH lower than 4.0.

12. Method according to claim 11, wherein stream (S) comprises the diacid (A), the diamine (B) in the form of a salt, notably in the form of a salt with the acid (Ac), and compound (A*).

13. Method according to any one of claims 11-12, wherein step d) after hydrolysis in acidic conditions comprises:
(i) - at least one unit operation selected in the group consisting of liquid-solid separation, crystallization and distillation; and
(ii) - a step in which the salt of the diamine (B) reacts with a base in order to release the diamine (B).

14. Method according to any one of the preceding claims, wherein step d) comprises at least one unit operation selected in the group consisting of liquid-solid separation, crystallization and distillation.

15. Method according to any one of the preceding claims, wherein step c) is performed in batch in a batch reactor in which product (P) is initially charged and no further product (P) is transferred during the hydrolysis.

16. Method according to any one of the preceding claims, wherein step c) is performed with a weight ratio r_{water} lower than 5.0, r_{water} being defined as weight of water of the aqueous medium used in step c) / weight of product (P).

## Patentansprüche

1. Verfahren zur Rückgewinnung der Monomere aus einem Polyamid (PA), insbesondere vom AABB-Typ, umfassend die folgenden Schritte:
- a) ein Produkt (P), umfassend eine Polymerkomponente, die das Polyamid (PA) umfasst, wird mit einer Verbindung (A*) in Kontakt gebracht, um das Molekulargewicht des Polyamids (PA) zu verringern, wobei die Polymerkomponente in geschmolzener Form vorliegt und die Verbindung (A*) aus der Gruppe der C₂-C₁₈ Carbonsäuren ausgewählt ist;
- b) die am Ende von Schritt a) erhaltene Mischung wird gegebenenfalls behandelt, um aus der geschmolzenen Mischung mindestens einen Feststoff zu entfernen;
- c) die Hydrolyse der Moleküle von Polyamid(en), die in der am Ende von Schritt a) oder des gegebenenfalls durchgeführten Schritts b) erhaltenen Mischung vorhanden sind, wird in einem wässrigen Medium entweder (i) durch eine saure oder basische Hydrolyse unter Einbeziehung einer Säure (Ac) (Hydrolyse unter sauren Bedingungen) oder einer Base (Ba) (Hydrolyse unter basischen Bedingungen) und bei einem pH-Wert von jeweils weniger als 6,0 oder mehr als 8,0 oder (ii) durch eine enzymatische Hydrolyse durchgeführt;
- d) ein Strom (S), umfassend die Disäure (A), das Diamin (B) und die Verbindung (A*), wobei jede dieser drei Verbindungen entweder in ihrer freien Form oder in Form eines Salzes vorliegt, wird am Ende von Schritt c) gewonnen und weiterverarbeitet, um die Disäure (A), das Diamin (B) und die Verbindung (A*) zu trennen und zurückzugewinnen.

2. Verfahren nach Anspruch 1, wobei die Wiederholungseinheiten des Polyamids (PA) vom AABB-Typ aus Wiederholungseinheiten (R_{PA}) bestehen, die aus der Kondensation mindestens einer Disäure (A) und mindestens eines Diamins (B) gebildet sind, wobei die Wiederholungseinheiten (R_{PA}) der nachstehenden Formel (F) entsprechen:
-NH-Rₐ-NH-C(O)-R_{b}-C(O)- (F)
wobei Rₐ und R_{b}, die gleich oder voneinander verschieden sind, zweiwertige Kohlenwasserstoffgruppen sind, die aus der Gruppe der aliphatischen, alicyclischen, cycloaliphatischen und aromatischen Gruppen ausgewählt sind.

3. Verfahren nach einem der vorhergehenden Ansprüche, wobei das Polyamid (PA) aus der Gruppe ausgewählt ist, bestehend aus Polyamid 6.6, Polyamid 6.9, Polyamid 6.10, Polyamid 6.12, Polyamid 10.10, Polyamid 5.10, Polyamiden 5.6, Polyamid 5.9, Polyamid 4.6, Polyamid 4.9, Polyamid 4.10, Polyamid 12.12, Polyamid 10.12, Polyamid XT, wobei X ein C₄-C₁₂-Diamin ist; Polyamid MXD6, Polyamid MXD6/PXD6, Polyamid MXD6/MXDI, Polyamid 6T/66, Polyamid 6T/6I/66, Polyamid 6T/6I und Mischungen davon.

4. Verfahren nach einem der vorhergehenden Ansprüche, wobei der Anteil an Polyamid (PA) in Produkt (P) mindestens 30,0 Gew.-%, insbesondere mindestens 40,0 Gew.-%, beträgt.

5. Verfahren nach einem der vorhergehenden Ansprüche, wobei die Verbindung (A*) ausgewählt ist:
- aus der Gruppe, bestehend aus den C₂-C₁₈ Monocarbonsäuren, C₂-C₁₈ Dicarbonsäuren und der Kombination von zwei oder mehr der genannten Säuren; oder
- aus der Gruppe, bestehend aus linearen oder verzweigten C₂-C₁₈ Monocarbonsäuren, linearen oder verzweigten C₂-C₅ Dicarbonsäuren, linearen oder verzweigten C₇-C₁₈ Dicarbonsäuren und der Kombination von zwei oder mehr der genannten Säuren.

6. Verfahren nach einem der vorhergehenden Ansprüche, wobei die Verbindung (A*) ausgewählt ist:
- aus der Gruppe, bestehend aus Carbonsäuren der Formel CH₃-(CH₂)ₙ-COOH (V), wobei n eine ganze Zahl zwischen 0 und 16 ist, Carbonsäuren der Formel HOOC-(CH₂)ₘ-COOH (VI), wobei m eine ganze Zahl zwischen 0 und 16 ist, Isophthalsäure, Terephthalsäure und der Kombination von zwei oder mehr der genannten Säuren; oder
- aus der Gruppe, bestehend aus Carbonsäuren der Formel CH₃-(CH₂)ₙ-COOH (V), wobei n eine ganze Zahl zwischen 0 und 16 ist, Carbonsäuren der Formel HOOC-(CH₂)ₘ-COOH (VI), wobei m eine ganze Zahl zwischen 0 und 16 ist, mit der Maßgabe, dass m nicht 2 ist, Isophthalsäure, Terephthalsäure und der Kombination von zwei oder mehr der genannten Säuren

7. Verfahren nach einem der vorhergehenden Ansprüche, wobei die Verbindung (A*) dieselbe ist wie die Disäure (A) oder eine der Disäuren (A) des Polyamids (PA).

8. Verfahren nach einem der vorhergehenden Ansprüche, wobei der Anteil der Verbindung (A*) weniger als 50,0 Gew.-%, vorzugsweise weniger als 40,0 Gew.-%, beträgt, wobei dieser Anteil in Gew.-% als das Gewicht der Verbindung (A*) bezogen auf das Gesamtgewicht von [Polyamid (PA)+Verbindung (A*)] ausgedrückt wird; und/oder der Anteil der Verbindung (A*) mindestens 5,0 Gew.-%, vorzugsweise mindestens 10,0 Gew.-%, beträgt, wobei dieser Anteil in Gew.-% als das Gewicht der Verbindung (A*) bezogen auf das Gesamtgewicht von [Polyamid (PA)+Verbindung (A*)] ausgedrückt wird.

9. Verfahren nach einem der vorhergehenden Ansprüche, wobei das zahlenmittlere Molekulargewicht (Mn) des Polyamids (PA) vorzugsweise um ein Verhältnis r von mindestens 20,0 %, vorzugsweise mindestens 40,0 %, besonders bevorzugt mindestens 60,0 %, noch bevorzugter mindestens 75,0 %, verringert wird, wobei r definiert ist als: r = (Mn des Polyamids (PA) - Mn am Ende von Schritt a))/Mn des Polyamids (PA)) x 100.

10. Verfahren nach einem der vorhergehenden Ansprüche, wobei der am Ende von Schritt c) erreichte Umsatzgrad R des Polyamids (PA) vorzugsweise mindestens 90,0 Mol-%, vorzugsweise mindestens 95,0 Mol-%, beträgt.

11. Verfahren nach einem der vorhergehenden Ansprüche, wobei Schritt c) eine saure Hydrolyse ist, die vorzugsweise bei einem pH-Wert von weniger als 4,0 durchgeführt wird.

12. Verfahren nach Anspruch 11, wobei der Strom (S) die Disäure (A), das Diamin (B) in Form eines Salzes, insbesondere in Form eines Salzes mit der Säure (Ac), und die Verbindung (A*) umfasst.

13. Verfahren nach einem der Ansprüche 11-12, wobei Schritt d) nach Hydrolyse unter sauren Bedingungen umfasst:
(i) - mindestens eine Einheitsoperation, ausgewählt aus der Gruppe, bestehend aus Flüssig-Fest-Trennung, Kristallisation und Destillation; und
(ii) - einen Schritt, in dem das Salz des Diamins (B) mit einer Base reagiert, um das Diamin (B) freizusetzen.

14. Verfahren nach einem der vorhergehenden Ansprüche, wobei Schritt d) mindestens eine Einheitsoperation umfasst, ausgewählt aus der Gruppe, bestehend aus Flüssig-Fest-Trennung, Kristallisation und Destillation.

15. Verfahren nach einem der vorhergehenden Ansprüche, wobei Schritt c) chargenweise in einem Chargenreaktor durchgeführt wird, in den Produkt (P) anfänglich eingebracht wird und während der Hydrolyse kein weiteres Produkt (P) überführt wird.

16. Verfahren nach einem der vorhergehenden Ansprüche, wobei Schritt c) mit einem Gewichtsverhältnis r_{water} von weniger als 5,0 durchgeführt wird, wobei r_{water} als Gewicht des in Schritt c) verwendeten Wassers des wässrigen Mediums / Gewicht des Produkts (P) definiert ist.

## Revendications

1. Procédé de récupération des monomères à partir d'un polyamide (PA), notamment de type AABB, comprenant les étapes suivantes :
- a) un produit (P) comprenant un composant polymère comprenant le polyamide (PA) est mis en contact avec un composé (A*) afin de réduire la masse moléculaire du polyamide (PA), dans lequel le composant polymère est sous forme fondue et le composé (A*) est choisi dans le groupe des acides carboxyliques en C₂-C₁₈ ;
- b) le mélange obtenu à la fin de l'étape a) est éventuellement traité de manière à éliminer du mélange fondu au moins un matériau solide ;
- c) l'hydrolyse des molécules de polyamide(s) présentes dans le mélange obtenu à la fin de l'étape a) ou de l'étape b) éventuelle, est effectuée dans un milieu aqueux soit (i) par une hydrolyse acide ou basique impliquant un acide (Ac) (hydrolyse dans des conditions acides) ou une base (Ba) (hydrolyse dans des conditions basiques) et effectuée à un pH respectivement inférieur à 6,0 ou supérieur à 8,0, soit (ii) par une hydrolyse enzymatique ;
- d) un courant (S) comprenant le diacide (A), la diamine (B) et le composé (A*), chacun de ces trois composés étant soit sous sa forme libre soit sous la forme d'un sel, est récupéré à la fin de l'étape c) et est ensuite traité afin de séparer et récupérer le diacide (A), la diamine (B) et le composé (A*).

2. Procédé selon la revendication 1, dans lequel les motifs récurrents du polyamide (PA) de type AABB sont constitués de motifs récurrents (R_{Pa}) formés à partir de la condensation d'au moins un diacide (A) et d'au moins une diamine (B),
dans lequel les motifs récurrents (R_{Pa}) sont selon la formule (F) ci-dessous :
-NH-Rₐ-NH-C(O)-R_{b}-C(O)- (F)
dans lequel Rₐ et R_{b}, identiques ou différents l'un de l'autre, sont des groupes hydrocarbonés divalents choisis dans le groupe des groupes aliphatiques, alicycliques, cycloaliphatiques et aromatiques.

3. Procédé selon l'une quelconque des revendications précédentes, dans lequel le polyamide (PA) est choisi dans le groupe constitué par le polyamide 6.6, le polyamide 6.9, le polyamide 6.10, le polyamide 6.12, le polyamide 10.10, le polyamide 5.10, les polyamides 5.6, le polyamide 5.9, le polyamide 4.6, le polyamide 4.9, le polyamide 4.10, le polyamide 12.12, le polyamide 10.12, le polyamide XT où X est une C₄-C₁₂-diamine ; le polyamide MXD6, le polyamide MXD6/PXD6, le polyamide MXD6/MXDI, le polyamide 6T/66, le polyamide 6T/6I/66, le polyamide 6T/6I et leurs mélanges.

4. Procédé selon l'une quelconque des revendications précédentes, dans lequel la proportion de polyamide (PA) dans le produit (P) est d'au moins 30,0 % en poids, plus particulièrement d'au moins 40,0 % en poids.

5. Procédé selon l'une quelconque des revendications précédentes, dans lequel le composé (A*) est choisi :
- dans le groupe constitué par les acides monocarboxyliques en C₂-C₁₈, les acides dicarboxyliques en C₂-C₁₈ et la combinaison de deux ou plusieurs desdits acides ; ou
- dans le groupe constitué par les acides monocarboxyliques linéaires ou ramifiés en C₂-C₁₈, les acides dicarboxyliques linéaires ou ramifiés en C₂-C₅, les acides dicarboxyliques linéaires ou ramifiés en C₇-C₁₈ et la combinaison de deux ou plusieurs desdits acides.

6. Procédé selon l'une quelconque des revendications précédentes, dans lequel le composé (A*) est choisi :
- dans le groupe constitué par les acides carboxyliques de formule CH₃-(CH₂)ₙ-COOH (V), n étant un entier compris entre 0 et 16, les acides carboxyliques de formule HOOC-(CH₂)ₘ-COOH (VI), m étant un entier compris entre 0 et 16, l'acide isophtalique, l'acide téréphtalique et la combinaison de deux ou plusieurs desdits acides ; ou
- dans le groupe constitué par les acides carboxyliques de formule CH₃-(CH₂)ₙ-COOH (V), n étant un entier compris entre 0 et 16, les acides carboxyliques de formule HOOC-(CH₂)ₘ-COOH (VI), m étant un entier compris entre 0 et 16 à condition que m ne soit pas 2, l'acide isophtalique, l'acide téréphtalique et la combinaison de deux ou plusieurs desdits acides

7. Procédé selon l'une quelconque des revendications précédentes, dans lequel le composé (A*) est identique au diacide (A) ou à l'un des diacides (A) du polyamide (PA).

8. Procédé selon l'une quelconque des revendications précédentes, dans lequel la proportion de composé (A*) est inférieure à 50,0 % en poids, de préférence inférieure à 40,0 % en poids, cette proportion en % en poids étant exprimée comme le poids du composé (A*) par rapport au poids total de [polyamide (PA)+composé (A*)] ; et/ou la proportion de composé (A*) est d'au moins 5,0 % en poids, de préférence d'au moins 10,0 % en poids, cette proportion en % en poids étant exprimée comme le poids du composé (A*) par rapport au poids total de [polyamide (PA)+composé (A*)].

9. Procédé selon l'une quelconque des revendications précédentes, dans lequel la masse moléculaire moyenne en nombre (Mn) du polyamide (PA) est de préférence réduite selon un rapport r d'au moins 20,0 %, de préférence d'au moins 40,0 %, plus préférentiellement d'au moins 60,0 %, encore plus préférentiellement d'au moins 75,0 %, r étant défini comme : r = (Mn du polyamide (PA) - Mn à la fin de l'étape a))/Mn du polyamide (PA)) x 100.

10. Procédé selon l'une quelconque des revendications précédentes, dans lequel le degré de conversion R du polyamide (PA) atteint à la fin de l'étape c) est de préférence d'au moins 90,0 % en moles, de préférence d'au moins 95,0 % en moles.

11. Procédé selon l'une quelconque des revendications précédentes, dans lequel l'étape c) est une hydrolyse acide, effectuée de préférence à un pH inférieur à 4,0.

12. Procédé selon la revendication 11, dans lequel le courant (S) comprend le diacide (A), la diamine (B) sous la forme d'un sel, notamment sous la forme d'un sel avec l'acide (Ac), et le composé (A*).

13. Procédé selon l'une quelconque des revendications 11-12, dans lequel l'étape d) après hydrolyse dans des conditions acides comprend :
(i) - au moins une opération unitaire choisie dans le groupe constitué par la séparation liquide-solide, la cristallisation et la distillation ; et
(ii) - une étape dans laquelle le sel de la diamine (B) réagit avec une base afin de libérer la diamine (B).

14. Procédé selon l'une quelconque des revendications précédentes, dans lequel l'étape d) comprend au moins une opération unitaire choisie dans le groupe constitué par la séparation liquide-solide, la cristallisation et la distillation.

15. Procédé selon l'une quelconque des revendications précédentes, dans lequel l'étape c) est effectuée par lots dans un réacteur discontinu dans lequel le produit (P) est initialement chargé et aucun produit (P) supplémentaire n'est transféré pendant l'hydrolyse.

16. Procédé selon l'une quelconque des revendications précédentes, dans lequel l'étape c) est effectuée avec un rapport pondéral rₑₐᵤ inférieur à 5,0, rₑₐᵤ étant défini comme le poids d'eau du milieu aqueux utilisé à l'étape c) / poids du produit (P).
